# EUROPÄISCHE PATENTSCHRIFT

(11) **EP 2 272 663 B1**
(45) Veröffentlichungstag und Bekanntmachung des Hinweises auf die Patenterteilung: **07.12.2011**
(21) Anmeldenummer: 10163726.2
(22) Anmeldetag: 25.05.2010
(51) Int. Cl.: B32B 9/02, C08J 5/12

(54) **Verfahren zur Herstellung einer Leder-Verbundfolie**
Method for mounting a leather compound film
Procédé de fabrication d'une feuille composite en cuir

(30) Priorität: 23.06.2009 DE 102009026009
(43) Veröffentlichungstag der Anmeldung: 12.01.2011
(73) Patentinhaber: Benecke-Kaliko AG, 30419 Hannover (DE)
(72) Erfinder: Bühring, Jürgen, 30900, Wedemark (DE); Gerken, Andreas, 30161, Hannover (DE); Trylus, Michael, 30165, Hannover (DE)
(74) Vertreter: Finger, Karsten

(56) Entgegenhaltungen:
- EP-A2- 0 234 028
- WO-A2-00/30847
- DE-A1- 19 815 115
- DE-B3-102005 042 470
- US-A1- 2009 110 941

## Beschreibung

Die Erfindung betrifft ein Verfahren zur Herstellung einer Leder-Verbundfolie im Umkehrstreichverfahren.

Verbundfolien, insbesondere für die Innenverkleidung von Kraftfahrzeugen sind weithin bekannt und werden z. B. verwendet als Überzug von Armaturenbrettern, Türeinsätzen, Sonnenblenden etc. eingesetzt. Solche Verbundfolien bestehen üblicherweise aus einer mehrschichtig unterschäumten Kunststoff-Folie, die auf ihrer Oberseite eine dreidimensional strukturierte, geprägte Oberfläche aufweist, nämlich eine so genannte Musterung oder Narbung in verschiedensten Formen und Ausführungen.

Im Bereich des Automobilinterieurs ist ein starker Trend zur Verbesserung der Qualitätsanmutung zu beobachten. Dieser Trend hat dazu geführt, dass bei vielen der typischen Folienanwendungen in Form von Formkörpern im Dekorbereich Kriterien wie die Griffigkeit, das "Anfühlen" (Haptik) und das gesamte optische und taktile Erscheinungsbild einen sehr hohen Stellenwert in der Beurteilung durch die Kunden gewonnen haben.

Das ist unter anderem auch der Grund dafür, dass die bisher üblichen Kunstleder in Fahrzeugen der Oberklasse zur Zeit weniger gefragt sind, da viele Endkunden eine Innenausstattung zumindestens in Teilen aus echtem Leder verlangen.

So weisen einige Fahrzeuge dieses Luxus-Segmentes bereits einen Anteil von ca. 35% an Leder Echt-Ausstattungen auf.

Zusätzlich sind "echte" Lederausstattungen von den Herstellern von Flugzeugen, Kreuzfahrtschiffen und Yachten aus Prestige- und Imagegründen vorgeschrieben.

Dabei darf nach der RAL 060 A2 jedes Leder mit einer maximalen Beschichtung bis 0,15 mm und einem minimal 80 %igen Lederanteil als "echtes" Leder bezeichnet werden.

Nun ist nur stückweise als einzelne Haut verfügbar, wobei jede Haut qualitativ unterschiedliche Eigenschaften im Vergleich zu anderen Häuten besitzen kann. Zudem ist die Herstellung von echtem Leder sehr arbeitsintensiv durch Einzelstückfertigung, viele manuelle Arbeitsgänge und ist dadurch sehr kostenintensiv. Außerdem ist Leder im täglichen Gebrauch auch empfindlich gegen Abrieb und weist schnell Gebrauchsspuren auf.

Es wurde daher schon vorgeschlagen, Leder mit Beschichtungen zu versehen, die zur Sicherstellung der Dauergebrauchstüchtigkeit wie Reinigungsfähigkeiten, Farb- und Lichtechtheiten, Farbkonstanz, Abriebbeständigkeit etc. notwendig sind. Diese Beschichtungen können nur bei geringfügig erhöhten Temperaturen oder Raumtemperatur durchgeführt werden, da Leder nicht temperaturbeständig ist und somit nicht direkt thermischen Prozessen unterworfen werden kann.

Zudem ist eine einheitliche reproduzierbare Lackierung von einzelnen Lederhäuten schwierig, so dass sich üblicherweise nur eingeschränkte Designmöglichkeiten ergeben

Auch sind Herstellverfahren für Lederverbundfolien im Stand der Technik bekannt. So offenbart die DE 10 2005 042 470 B3 ein Verfahren, bei dem eine dünne Lederschicht in Form von einzelnen Lederflecken mit Hilfe eine Klebstoffschicht so auf einen mit Durchbrüchen oder Öffnungen versehene textilen Trägeraufgebracht wird. Der Kleber wird dabei erwärmt und drückt sich zum Teil so durch die textile Trägerschicht, dass 10 bis 20% des Klebers nach der Herstellung der Verbundfolie sich auf der Rückseite der textilen Trägerschicht befinden.

Nachteilig hierbei ist es, dass das Verbundleder hierbei nicht "Rolle auf Rolle" und unter Nutzung von industriellen Serien-Fertigungsprozessen gefertigt werden.

Für die Erfindung bestand daher die Aufgabe, ein Herstellverfahren für die Fertigung von "echtem Leder" in Form von Verbund-Lederfolien vorzuschlagen, bei dem die Zurichtung von rohem (Crust)-Leder ohne zusätzliche Handarbeitsschritte erfolgt, eine Einzelanfertigung von Lederstücken vermieden wird und mit dem eine kostengünstige Herstellung in großen Mengen in gleichbleibender Qualität möglich ist.

Gelöst wird diese Aufgabe durch die Merkmale des Hauptanspruchs. Weitere vorteilhafte Ausbildungen sind in den Unteransprüchen offenbart.

Dabei weist das Herstellverfahren folgende Schritte auf:
- ein Trägerband als Hilfs-Trägerstruktur wird mit einer ersten Kunststoffmasse, dem so genannten Deckstrich, beschichtet,
- diese erste Kunststoffmasse, d.h. der Deckstrich wird in einer nachfolgenden Wärmebehandlung ausgehärtet, z. B. durch Strahlungswärme,
- danach wird auf diese erste Kunststoffschicht eine zweite Kunststoffmasse als Kleberschicht , auch Kaschiermasse / Kaschierung genannt, aufgetragen
- auf die noch reaktive Kleberschicht/Kaschierung wird ein Leder, d.h. ein echtes Leder aufgetragen,
- nach ausreichender Trocknung / Ausreaktion und der entstandenen Leder-Verbundfolie aus Kunststoff und Lederschichten wird das Trägerband abgezogen - und ggf. die Verbundfolie zur Weiterverarbeitung auf Rollen gewickelt, geprägt, lackiert, oder mit weiteren Schichten versehen.

Damit kann mit bestehendem Maschinenpark zur Fertigung von Kunstledern nach dem Umkehrbeschichtungsverfahren auch ein definitionsgemäßes "echtes Leder" von "Rolle auf Rolle" gefertigt werden, indem an den Streichmaschinen anstatt des Textils an der Kaschierstation ein Leder von der Rolle zugeführt wird. Manuelle Arbeitsschritte wie bei der herkömmlichen Zurichtung von Ledern können so vollständig vermieden werden.

Die aus der Kunstlederfertigung bekannten Möglichkeiten hinsichtlich Oberflächendesign, Rezepturen, Lackierungen, Finish- und Farbeinstellungen können hierbei ohne Einschränkungen eingesetzt werden, was eine völlig neue Möglichkeit der Herstellung von "echtem Leder" bietet..

Die Vorteile von echtem Leder in Form der erfindungsgemäßen Leder-Verbundfolie nach dem beschriebenen Verfahren hergestellt wird, sind Designfreiheit, Verbesserung der Oberflächeneigenschaften im Vergleich zum zugerichteten Leder, verbesserungen im Hinblick auf Farbechtheiten, Farbkonstanz und Abrieb.

Ermöglicht wird so die Herstellung von großen Mengen von Leder mit einer gleichbleibenden Oberflächenqualität und Oberflächenaussehen (Farbe, Mattierung, Lackierung), da ein automatisiertes Herstellungsverfahren unter Einsatz von Rollenware eingesetzt wird. Weitere Vorteile ergeben sich durch den geringeren Maschinen-Aufwand, da vorhandener Maschinenpark genutzt werden kann und durch die Harmonisierung der Herstellung von Leder- und Kunstlederprodukten . Die aufwändige Zurichtung des Leders in vielen Handarbeitsschritten entfällt, es sind diverse Ledertypen je nach Kunden-Anforderung einsetzbar.

Eine vorteilhafte Weiterbildung besteht darin, dass als erste und/oder zweite Kunststoffmasse eine reaktive Polyurethanmasse mit Lösungsmittel aufgetragen wird.

Eine weitere vorteilhafte Weiterbildung besteht darin, dass als erste und/oder zweite Kunststoffmasse ein lösungsmittelarmes System aus Polyurethan- , Acrylat- , Polyolefin- , oder Latexdispersionen oder aus Gemischen daraus aufgetragen wird.

Eine weitere vorteilhafte Weiterbildung besteht darin, dass als erste und/oder zweite Kunststoffmasse ein lösungsmittelarmes System aus PVC-Plastisolen aufgetragen wird. Eine weitere vorteilhafte Weiterbildung besteht darin, dass als zweite Kunststoffmasse ein reaktives oder nicht reaktives thermoplastisches Polymer aufgetragen wird.

Eine weitere vorteilhafte Weiterbildung besteht darin, dass als zweite Kunststoffmasse ein reaktiver , lösungsmittelfreier Thermoplast auf Polyurethanbasis aufgetragen wird, der unter Feuchtigkeitseinwirkung vernetzt.

Eine weitere vorteilhafte Weiterbildung besteht darin, dass der Auftrag des Leders in die nach ihrem Aufbringen noch nicht getrocknete Kleberschicht erfolgt.

Eine weitere vorteilhafte Weiterbildung besteht darin, dass der Auftrag des Leders in die getrocknete und wieder durch Wärmeeintrag verflüssigte Kleberschicht erfolgt.

Die Herstellung des "echten Leders" nach erfindungsgemäßen Verfahren erfolgt also nach dem Umkehrbeschichtungsverfahren, welches auch zur Herstellung von Kunstledern verwendet wird.

Dabei wird ein erstes Deckstrich-Beschichtungssystem auf ein genarbtes oder ungenarbtes Trägerband aufgetragen und in einem nachfolgenden Ofen ausgehärtet. Das Deckstrichsystem kann dabei aus einer reaktiven Polyurethanmasse mit viel oder wenig Lösungsmitteln bestehen (wobei lösungsmittelarme Systeme als High-Solid-Systeme bezeichnet werden), aus Dispersionen (z.B. Polyurethan-, Acrylat-, Polyolefin-, Latexdispersionen oder Gemischen hieraus) oder aus PVC-Plastisolen.

Der Auftrag einer weiteren, wahlweise geschäumten Schicht aus oben genannten Grundsystemen ist möglich aber nicht notwendig.

Danach wird eine Kaschiermasse aufgetragen, die wiederum aus einer reaktiven Polyurethanmasse mit viel oder wenig Lösungsmitteln bestehen kann (wobei lösungsmittelarme Systeme auch hier als High-Solid-Systeme bezeichnet werden), aus Dispersionen (z.B. Polyurethan-, Acrylat-, Polyolefin-, Latexdispersionen oder Gemischen hieraus), aus PVC-Plastisolen oder aus reaktiven oder nicht reaktiven thermoplastischen Polymeren.

Bevorzugt kann die Kaschiermasse ein reaktiver lösungsmittelfreier Thermoplast auf Polyurethanbasis sein, der unter Feuchtigkeitseinwirkung vernetzt und dadurch besonders wärmebeständig wird. In diesem Fall wird die Kaschiermasse bevorzugt über geeignete Apparaturen zum Auftragen von sogenannten Hotmelt-Klebstoffen (Breitschlitzdüse, Walzen, Streueinrichtung, Sprüheinrichtung, Fiberdüsen etc.) aufgetragen.

In die noch nicht getrocknete oder in die durch Wärme wieder verflüssigte Kaschiermasse wird das Leder von der Rolle eingebettet. Der Gesamtverbund aus den aufgetragenen Massen muss im Verhältnis zum Leder so ausgelegt sein, dass die Definition von echtem Leder noch erfüllt wird, wenn der Verbund später als echtes Leder bezeichnet werden soll. Soll der Verbund später nicht dieser Definition entsprechen, können die im Umkehrbeschichtungsverfahren aufgetragenen Schichtstärken natürlich höher gewählt werden.

Der hergestellte Verbund kann optional noch geprägt und/oder lackiert werden. Die Lackierung kann dabei auch vor dem Prägen erfolgen.

Eine weitere vorteilhafte Weiterbildung besteht darin, dass der Auftrag des Leders in Form von einzelnen Lederstücken erfolgt.

Eine weitere vorteilhafte Weiterbildung besteht darin, dass der Auftrag des Leders in Form einer - endlosen - Lederfolie erfolgt, ggf. als vorher hergestellte und mit Trägerschichten verbundene Lederfolie.

Eine weitere vorteilhafte Weiterbildung besteht darin, dass das Trägerband mit der Negativstruktur der Oberfläche der Leder-Verbundfolie genarbt ist.

Eine weitere vorteilhafte Weiterbildung besteht darin, dass die Oberfläche der Leder-Verbundfolie nach dem Abziehen des Trägerbandes mit einer Narbstruktur geprägt wird, beispielsweise durch Walzenprägung.

Eine weitere vorteilhafte Weiterbildung besteht darin, dass zwischen der ersten (Deckstrich) und der zweiten Kunststoffmasse (Kleberschicht) eine geschäumte Kunststoffschicht aufgebracht wird.

Eine weitere vorteilhafte Weiterbildung besteht darin, dass die zwischen Trägerband und Leder befindlichen Kunststoffschichten eine Gesamtdicke von weniger als 0,15 mm aufweisen.

Eine weitere vorteilhafte Weiterbildung besteht darin, dass die erste Kunststoffschicht nach Abziehen des Trägerbandes mit einer weiteren Lackschicht versehen wird.

Eine weitere vorteilhafte Weiterbildung besteht darin, dass die Leder-Verbundfolie rückseitige mit weiteren Schaum und/oder Lackschichten versehen wird.

Eine weitere vorteilhafte Weiterbildung besteht darin, dass die Kunststoffschichten nach der Aushärtung eine dem Leder entsprechende Luftdurchlässigkeit aufweisen.

Wenn die Lederschicht als solche tragfähig genug ist, kann auch auf das Trägerband verzichtet werden. Dann muss die Außenbeschichtung aus Kunststoff später in einem separaten Arbeitsschritt aufgebracht werden. Dabei kann in einer Ausführungsart kann das Leder als Rollenware natürlich auch direkt beschichtet werden. Werden dabei thermoplastische Systeme zur Beschichtung verwendet, können diese (nach einem optionalen Lackierschritt) mittels einer Prägewalze mit einer Oberflächenstruktur versehen werden.

Besonders geeignet ist eine erfindungsgemäß hergestellte Leder-Verbundfolie als Verkleidungsteil für die Innenverkleidung eines Kraftfahrzeuges. Dies ist nicht von einem Verkleidungsteil mit "echtem Lederbezug" zu unterscheiden.

In einer Ausführungsart können auch glatte oder geprägte Folien als Rollenware verwendet werden, die dann mit dem Leder von der Rolle kaschiert werden können. Sind die verwendeten Folien thermoplastisch, kann der Kaschiervorgang unter Anschmelzen der Folie erfolgen, wobei das Leder von der Rolle in die Seite der Folie eingebette wird, die angeschmolzen wurde. Als Thermoplasten eignen sich beispielsweise Folien aus Polyolefinen, mit Polyolefinanteilen oder thermoplastischen Polyurethanen oder Anteilen an thermoplastischen Polyurethanen.

Das Leder von der Rolle kann auch über Kaschiermassen (beispielsweise reaktive Polyurethanmassen mit viel oder wenig Lösungsmitteln (wobei lösungsmittelarme Systeme auch hier als High-Solid-Systeme bezeichnet werden), Dispersionen (z.B. Polyurethan-, Acrylat-, Polyolefin-, Latexdispersionen oder Gemischen hieraus), PVC-Plastisolen oder reaktive oder nicht reaktive thermoplastische Polymere) mit der Folie verbunden werden. Dieser Verbund kann vor oder nach einem optionalen Lackiervorgang wiederum durch Prägen mit einer gewünschten Oberflächenstruktur versehen werden

In einer anderen Ausführungsart kann auch ein thermoplastisches Pulver auf einen Träger / auf ein Trägerband gestreut und zu einer Folie verschmolzen oder gesintert werden. Die weitere Verarbeitung erfolgt dann wie zuvor beschrieben

Es ergibt sich durch das erfindungsgemäße Verfahren ein Kostenvorteil gegenüber der bestehenden Technologie der Lederherstellung sowie eine signifikante Steigerung des Qualitätsniveaus von Leder bei konstanter Qualität über große Mengen. Dies ist besonders wichtig für die Belieferung der Automobilindustrie (100% innen-Ausstatter), der Flugzeugindustrie, für die Lieferung von Sitzpolstermaterialen, Kopfstützenbezüge, für Dekorflächen und Polstermöbel in der Schifffahrtsindustrie, für Dekorflächen und Polstermöbel in Sitz- und Wohnbereichen, für den Einsatz als Täschnermaterial und den Einsatz als Schuhoberleder oder Bekleidungsleder.

Anhand eines Ausführungsbeispieles soll die Erfindung näher erläutert werden.

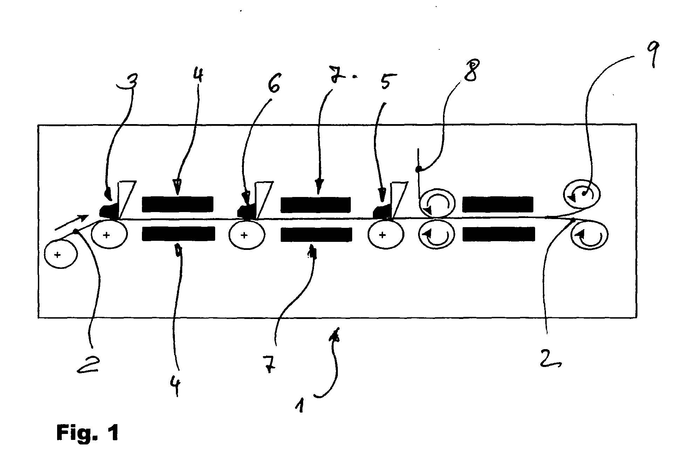

Die einzige Fig. 1 zeigt anhand einer Skizze die erfindungsgemäße Verfahrensweise anhand einer Anlage 1 zur Durchführung des Umkehrstreichverfahrens für LederVerbundfolien.

Man erkennt ein Trägerband 2 als Hilfs-Trägerstruktur, das in die Anlage einläuft und mit einer ersten Kunststoffmasse, dem so genannten Deckstrich 3, beschichtet wird.

Diese erste Kunststoffmasse, d.h. der Deckstrich wird in einer nachfolgenden Wärmebehandlungsanlage 4 in Form eines Heizstrahlers ausgehärtet.

Bei der hier gezeigten Ausführung wird zwischen dem Deckstrich 3 und der zweiten Kunststoffmasse, nämlich der Kleberschicht 5, wird eine geschäumte Kunststoffschicht 6 aufgebracht, die ebenfalls in einer nachfolgenden Wärmebehandlungsanlage 7 in Form eines weiteren Heizstrahlers ausgehärtet wird.

Auf die noch reaktive Kleberschicht/Kaschierung wird ein dünnes Leder 8, d.h. ein echtes Leder aufgetragen und nach ausreichender Trocknung / Ausreaktion der entstandenen Leder-Verbundfolie aus Kunststoff und Lederschichten wird das Trägerband 2 abgezogen - und ggf. die Verbundfolie zur Weiterverarbeitung auf Rollen 9 gewickelt und danach ggf. geprägt, lackiert, oder mit weiteren Schichten versehen.

### Bezugszeichenliste

### (Teil der Beschreibung)

- 1: Anlage zur Beschichtung im Umkehrstreichverfahren
- 2: Trägerband
- 3: Deckstrich
- 4: Wärmestrahler
- 5: Kleberschicht
- 6: Schaumschicht
- 7: Wärmestrahler
- 8: Leder
- 9: Rolle

## Patentansprüche

1. Verfahren zur Herstellung einer Leder-Verbundfolie im Umkehrstreichverfahren, wobei das Herstellverfahren folgende Schritte aufweist:
- ein Trägerband (2) wird mit einer ersten Kunststoffmasse (3) beschichtet,
- die erste Kunststoffmasse (3) wird in einer nachfolgenden Wärmebehandlung (4) ausgehärtet
- danach wird auf diese erste Kunststoffschicht eine zweite Kunststoffmasse als Kleberschicht (5) aufgetragen
- auf die noch reaktive Kleberschicht (5) wird ein Leder (8) aufgetragen
- nach ausreichender Trocknung / Ausreaktion und der entstandenen Leder-Verbundfolie aus Kunststoff und Lederschichten wird das Trägerband (2) abgezogen.

2. Verfahren nach Anspruch 1, bei dem als erste und/oder zweite Kunststoffmasse eine reaktive Polyurethanmasse mit Lösungsmittel aufgetragen wird.

3. Verfahren nach Anspruch 2, bei dem als erste und/oder zweite Kunststoffmasse ein lösungsmittelarmes System aus Polyurethan- , Acrylat- , Polyolefin- , oder Latexdispersionen oder aus Gemischen daraus aufgetragen wird.

4. Verfahren nach Anspruch 2, bei dem als erste und/oder zweite Kunststoffmasse ein lösungsmittelarmes System aus PVC-Plastisolen aufgetragen wird.

5. Verfahren nach einem der Ansprüche 1 bis 4, bei dem als zweite Kunststoffmasse ein reaktives oder nicht reaktives thermoplastisches Polymer aufgetragen wird.

6. Verfahren nach einem der Ansprüche 1 bis 4, bei dem als zweite Kunststoffmasse ein reaktiver , lösungsmittelfreier Thermoplast auf Polyurethanbasis aufgetragen wird, der unter Feuchtigkeitseinwirkung vernetzt.

7. Verfahren nach einem der Ansprüche 1 bis 6, bei dem der Auftrag des Leders (8) in die nach ihrem Aufbringen noch nicht getrocknete Kleberschicht erfolgt.

8. Verfahren nach einem der Ansprüche 1 bis 6, bei dem der Auftrag des Leders (8) in die getrocknete und wieder durch Wärmeeintrag verflüssigte Kleberschicht erfolgt.

9. Verfahren nach einem der Ansprüche 1 bis 8, bei dem der Auftrag des Leders (8) in Form von einzelnen Lederstücken erfolgt.

10. Verfahren nach einem der Ansprüche 1 bis 8, bei dem der Auftrag des Leders (8) in Form einer endlosen Lederfolie erfolgt.

11. Verfahren nach einem der Ansprüche 1 bis 10, bei dem das Trägerband mit der Negativstruktur der Oberfläche der Leder-Verbundfolie genarbt ist.

12. Verfahren nach einem der Ansprüche 1 bis 10, bei dem die Oberfläche der Leder-Verbundfolie nach dem Abziehen des Trägerbandes mit einer Narbstruktur geprägt wird.

13. Verfahren nach einem der Ansprüche 1 bis 12, bei dem zwischen der ersten und der zweiten Kunststoffmasse eine geschäumte Kunststoffschicht aufgebracht wird.

14. Verfahren nach einem der Ansprüche 1 bis 13, bei dem die zwischen Trägerband und Leder befindlichen Kunststoffschichten eine Gesamtdicke von weniger als 0,15mm aufweisen.

## Claims

1. Process for producing a leather-composite sheet by the reverse spreading process, where the production process comprises the following steps:
- a carrier belt (2) is coated with a first plastics composition (3),
- a subsequent heat treatment (4) hardens the first plastics composition (3)
- a second plastics composition is then applied as adhesive layer (5) to the said first plastics layer
- a leather (8) is applied to the adhesive layer (5) while it is still reactive
- once adequate drying/completion of reaction has occurred and the leather-composite sheet made of plastic and leather layers has been produced, the carrier belt (2) is peeled away.

2. Process according to Claim 1, in which the first and/or second plastics composition applied comprises a reactive polyurethane composition with solvent.

3. Process according to Claim 2, in which the first and/or second plastics composition applied comprises a low-solvent-content system made of polyurethane dispersions, of acrylate dispersions, of polyolefin dispersions or of latex dispersions, or of a mixture thereof.

4. Process according to Claim 2, in which the first and/or second plastics composition applied comprises a low-solvent-content system made of PVC plastisols.

5. Process according to any of Claims 1 to 4, in which the second plastics composition applied comprises a reactive or non-reactive thermoplastic polymer.

6. Process according to any of Claims 1 to 4, in which the second plastics composition applied comprises a reactive, solvent-free thermoplastic which is based on polyurethane, and which crosslinks on exposure to moisture.

7. Process according to any of Claims 1 to 6, in which the leather (8) is applied to the adhesive layer which has been applied but which has not yet dried.

8. Process according to any of Claims 1 to 6, in which the leather (8) is applied to the adhesive layer which has dried and which, via introduction of heat, has been reliquefied.

9. Process according to any of Claims 1 to 8, in which the leather (8) is applied in the form of individual pieces of leather.

10. Process according to any of Claims 1 to 8, in which the leather (8) is applied in the form of a continuous leather sheet.

11. Process according to any of Claims 1 to 10, in which the carrier belt has a grained structure with the negative of the structure of the surface of the leather-composite sheet.

12. Process according to any of Claims 1 to 10, in which the surface of the leather-composite sheet is embossed with a grain structure after the carrier belt has been peeled away.

13. Process according to any of Claims 1 to 12, in which, between the first and the second plastics composition, a foamed plastics layer is applied.

14. Process according to any of Claims 1 to 13, in which the total thickness of the plastics layers located between carrier belt and leather is less than 0.15 mm.

## Revendications

1. Procédé de fabrication d'un film composite de cuir par le procédé d'enduction inverse, le procédé de fabrication comprenant les étapes suivantes :
- une bande support (2) est revêtue avec une première composition plastique (3),
- la première composition plastique (3) est durcie lors d'un traitement thermique ultérieur (4), puis
- une seconde composition plastique est appliquée en tant que couche adhésive (5) sur cette première couche plastique,
- un cuir (8) est appliqué sur la couche adhésive (5) encore réactive,
- après séchage/réaction suffisants, le film composite de cuir formé constitué de couches de plastique et de cuir est retiré de la bande support (2).

2. Procédé selon la revendication 1, dans lequel une composition de polyuréthane réactive contenant un solvant est appliquée en tant que première et/ou seconde composition plastique.

3. Procédé selon la revendication 2, dans lequel un système pauvre en solvant constitué de dispersions de polyuréthane, d'acrylate, de polyoléfine ou de latex ou leurs mélanges est appliqué en tant que première et/ou seconde composition plastique.

4. Procédé selon la revendication 2, dans lequel un système pauvre en solvant constitué de plastisols de PVC est appliqué en tant que première et/ou seconde composition plastique.

5. Procédé selon l'une quelconque des revendications 1 à 4, dans lequel un polymère thermoplastique réactif ou non réactif est appliqué en tant que seconde composition plastique.

6. Procédé selon l'une quelconque des revendications 1 à 4, dans lequel un thermoplastique réactif exempt de solvant à base de polyuréthane, qui réticule sous l'effet de l'humidité, est appliqué en tant que seconde composition plastique.

7. Procédé selon l'une quelconque des revendications 1 à 6, dans lequel l'application du cuir (8) a lieu dans la couche adhésive encore non sèche après son application.

8. Procédé selon l'une quelconque des revendications 1 à 6, dans lequel l'application du cuir (8) a lieu dans la couche adhésive séchée et de nouveau liquéfiée par apport de chaleur.

9. Procédé selon l'une quelconque des revendications 1 à 8, dans lequel l'application du cuir (8) a lieu sous la forme de morceaux de cuir individuels.

10. Procédé selon l'une quelconque des revendications 1 à 8, dans lequel l'application du cuir (8) a lieu sous la forme d'un film de cuir infini.

11. Procédé selon l'une quelconque des revendications 1 à 10, dans lequel la bande support est chagrinée avec la structure négative de la surface du film composite de cuir.

12. Procédé selon l'une quelconque des revendications 1 à 10, dans lequel la surface du film composite de cuir est gravée après le retrait de la bande support avec une structure chagrinée.

13. Procédé selon l'une quelconque des revendications 1 à 12, dans lequel une couche plastique moussée est appliquée entre la première et la seconde composition plastique.

14. Procédé selon l'une quelconque des revendications 1 à 13, dans lequel les couches plastiques se trouvant entre la bande support et le cuir présentent une épaisseur totale inférieure à 0,15 mm.
